(19) **Europäisches Patentamt European Patent Office Office européen des brevets**

(11) **EP 3 916 880 B1**

(12) **EUROPEAN PATENT SPECIFICATION**

(45) Date of publication and mention
of the grant of the patent:
**12.07.2023 Bulletin 2023/28**

(21) Application number: **20177391.8**

(22) Date of filing: **29.05.2020**

(51) International Patent Classification (IPC):
*H01M 10/48* (2006.01)     *H01M 10/42* (2006.01)
*G01K 7/22* (2006.01)

(52) Cooperative Patent Classification (CPC):
**H01M 10/486; G01K 7/22; H01M 10/425;
H01M 10/482;** H01M 2200/105; H01M 2200/106;
H01M 2220/20; Y02E 60/10

(54) **TEMPERATURE-DEPENDENT RESISTOR NETWORK FOR TEMPERATURE ANOMALY MONITORING IN A BATTERY SYSTEM**

TEMPERATURABHÄNGIGES WIDERSTANDSNETZWERK ZUR ÜBERWACHUNG VON TEMPERATURANOMALIEN IN EINEM BATTERIESYSTEM

RÉSEAU DE RÉSISTANCES DÉPENDANT DE LA TEMPÉRATURE POUR LA SURVEILLANCE D'ANOMALIES DE TEMPÉRATURE DANS UN SYSTÈME DE BATTERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.12.2021 Bulletin 2021/48**

(73) Proprietor: **Samsung SDI Co., Ltd.
Gyeonggi-do 17084 (KR)**

(72) Inventors:
• **Erhart, Michael
8054 Seiersberg-Pirka (AT)**
• **Parz, Peter
8111 Gratwein-Straßengl (AT)**
• **Kraberger, Gernot
8010 Graz (AT)**

(74) Representative: **Gulde & Partner
Patent- und Rechtsanwaltskanzlei mbB
Wallstraße 58/59
10179 Berlin (DE)**

(56) References cited:
EP-A1- 3 579 300     JP-A- 2007 123 287
US-A1- 2009 317 699     US-A1- 2011 210 703

**Description**

**Field of the Invention**

The present invention relates to a monitoring system for monitoring the temperature of a battery system / battery module, and in particular to a monitoring system comprising a network of temperature-dependent resistors (thermistors). The invention further relates to a battery system / battery module comprising such a monitoring system and to a vehicle equipped with at least one of such battery systems / battery modules. Further, the invention concerns about a method for monitoring the temperature of the battery cells of a battery system / battery module by means of said monitoring system.

**Technological Background**

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle additionally powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or prismatic, depends on the battery's intended purpose. Lithium-ion (and similar lithium polymer) batteries, widely known via their use in laptops and consumer electronics, dominate the most recent group of electric vehicles in development.

Rechargeable batteries may be used as a battery system or battery module (the latter terms may be used interchangeably) formed of a plurality of unit battery cells coupled in series and/or in parallel so as to provide a high energy density, in particular for motor driving of a hybrid or fully electric vehicle. That is, the battery module is formed by interconnecting the electrode terminals of the plurality of unit battery cells depending on a required amount of power and in order to realize a high-power rechargeable battery.

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge (SoC), potential electrical performance, charging ability and internal resistance as well as actual or predicted power demands or surpluses of the consumers.

Battery systems usually comprise a battery management system (BMS) and/or battery management unit (BMU) for processing the aforementioned information. The BMS/BMU may communicate to the controllers of the various electrical consumers via a suitable communication bus, e.g. a SPI or CAN interface. The BMS/BMU may further communicate with each of the battery submodules, particularly with a cell supervision circuit (CSC) of each battery submodule. The CSC may be further connected to a cell connection and sensing unit (CCU) of a battery submodule that interconnects the battery cells of the battery submodule.

Thus, the BMS/BMU is provided for managing the battery pack, such as by protecting the battery from operating outside its safe operating area, monitoring its state, calculating secondary data, reporting that data, controlling its environment, authenticating it and/or balancing it.

To provide thermal control of the battery pack, an active or passive thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting/discharging/ dissipating heat from the cells is typically required.

Currently, the temperature of the individual cells inside a battery module/pack is typically determined using a model that takes into account the absolute temperature measured just at a few points inside the module/pack. A temperature anomaly (e. g., overtemperature) of individual cells is detected within this model or using changes in the electrical characteristics of the involved cells. As a safety feature, the battery cells may have an OSD (Overcharge Safety Device) installed that reacts to, e. g., overtemperature, via detection of the gas buildup. In the described state-of-the-art approach, temperature anomalies (e. g., overtemperature) of individual cells cannot be reliably detected.

However, even in case that each battery cell of a battery module/pack is equipped with a temperature sensor, the known approaches do not provide a reliable detection of temperature anomalies of individual cells. For example, only measuring that one or at least one of the cells exceeds a certain threshold value does not prove sufficient, as the question, whether or not a thermal anomaly occurs inside at least one of the cells of the battery module may also depend on the ambient temperature of a battery module. Documents US2011/210703, JP2007123287 and US2009/317699 disclose monitoring systems for monitoring the temperature of a battery module.

It is thus an object of the present invention to overcome or reduce at least some of the drawbacks of the prior art and to provide a monitoring system that exhibits an improved reliability with regard to the detection, whether or not a thermal anomaly occurs in a cell of a battery module. It is further an object of the invention to provide a battery module comprising such a monitoring system and a vehicle equipped with at least one of such battery modules. Further, it is an object of the invention to provide a method for monitoring the temperature of the battery cells of a battery module by means of said monitoring system.

Moreover, the invention can be implemented using cheap sensor technology. Then, the invention ensures a reliable detection of thermal anomalies at a very low cost.

Temperature anomalies can be due to different error scenarios - a detection system allows to react. For instance, in case of cold temperatures, the maximum power can be adapted to the coldest cell. In case of overtemperature of a cell, the requested cooling power can be adapted to the hottest cell. If a cell has overtemperature above the limits of safe operation, the relay of the battery pack can be opened. Using the monitoring system and/or the method according to the invention, the detection of a critical state of an individual cell becomes cheaper than using the above-described method based on the employment of OSD.

**Summary of Invention**

The present invention is defined by the features of claims 1 and 11 and relates to a monitoring system for monitoring the temperature of a battery module.

Embodiments of the present disclosure seek to solve at least one of the problems existing in the prior art to at least some extent. In particular, a monitoring system for monitoring the temperature of a battery module having a plurality of battery cells is provided, the monitoring system comprising: an electric network comprising a plurality of thermistors, wherein each of the thermistors is thermally connected to a battery cell; a monitoring device being adapted for measuring a total electric resistance of the electric network comprising the plurality of thermistors and further being adapted for generating a signal in case of detecting that the value of the total resistance of the electric network traverses a predetermined threshold resistance value; wherein the monitoring system is adapted to determine a mean temperature of the battery module independently from the measurement of the total resistance of the electric network; and wherein the predetermined threshold resistance value is dependent on the mean temperature of the battery module.

In the context of this invention, the term "plurality" refers to a number of two or more entities, e. g., "a plurality of battery cells" denotes two or more battery cells and "a plurality of thermistors" means two or more thermistors. Further, the expression "resistance" refers to the electric resistance (of a temperature-dependent resistor or a network of such temperature-dependent resistors). Also, the expression "mean temperature" may indeed refer to the average temperature within the battery module / battery pack; in reality, however, the "mean temperature" as used in this context is usually just some temperature measured somewhere (at some point) in the battery module / battery pack, and it is assumed for the purpose of the invention that this point is in thermal equilibrium or at least approximately in thermal equilibrium with the whole battery module / battery pack.

Also, the expression "value of the total resistance of the electric network" may refer to an absolute value of the total resistance of the electric network or, alternatively, to a relative value of the total resistance of the electric network, i. e., to the absolute value of the total resistance of the electric network relative to the resistance value corresponding to the ambient temperature of the battery cells in the battery module/pack (or relative to the mean temperature within the battery module/pack).

To briefly summarize the above, the monitoring system allows for a detection of temperature anomalies of cells in a battery module/pack using a network of temperature-sensitive resistors.

According to one embodiment of the monitoring system according to the invention, the number of thermistors is smaller than the number of battery cells, and each battery cell is connected to at most one thermistor and each thermistor is connected to one and only one battery cell.

According to an alternative embodiment of the monitoring system according to the invention, the number of thermistors is equal to the number of battery cells, and each battery cell is connected to one thermistor and each thermistor is connected to one and only one battery cell.

According to one embodiment of the monitoring system according to the invention, the electric network is a parallel connection of the thermistors.

According to an alternative embodiment of the monitoring system according to the invention, the electric network is a series connection of the thermistors.

According to still another alternative embodiment of the monitoring system, the thermistors mounted on a first subset of the battery cells form a first network having a first net resistance value, the thermistors mounted on a second (preferably disjoint) subset of the battery cells form a second network with a second net resistance value and the first and the second net resistance value are monitored and analyzed separately. In other words, the invention is not limited to all cells of a battery forming one and only one network; rather, the use of several independent networks of temperature-dependent resistors (such as thermistors) within one battery module is also possible.

In one embodiment of the monitoring system according to the invention, the electric network is adapted such that the total resistance of the network decreases, as the temperature to which at least one of the thermistors is/are exposed increases, while the temperature to which the remaining thermistors are exposed remains constant; and the monitoring device is adapted for generating a signal in case of measuring that the value of the total resistance of the electric network falls below the predetermined threshold resistance value. This embodiment is in particular suitable to detect an overtemperature (such as a thermal runaway) of one or more cells in the battery module. However, embodiments of the battery system may also aim at detecting an undertemperature; in the latter case, the monitoring device is rather adapted for generating a signal in case of measuring that the value of the total resistance of the electric network exceeds over the predetermined threshold resistance value. Also, embodiments may detect both, overtemperature and undertemperature of one or more cells in the battery module; in the latter case, the monitoring device may be adapted for generating a signal in case of measuring that the value of the total resistance of the electric network falls below a predetermined first threshold resistance value or exceeds over a predetermined second threshold resistance value.

In one embodiment of the monitoring system according to the invention, each of the thermistors is a negative thermal coefficient (NTC) thermistor.

In one embodiment of the monitoring system according to the invention, the electric network is adapted such that the total resistance of the network increases, as the temperature to which at least one of the thermistors is/are exposed increases, while the temperature to which the remaining thermistors are exposed remains constant; and the monitoring device is adapted for generating a signal in case of measuring that the value of the total resistance of the electric network exceeds over the predetermined threshold resistance value. This embodiment is in particular suitable to detect an overtemperature (such as a thermal runaway) of one or more cells in the battery module. However, embodiments of the battery system may also aim at detecting an undertemperature; in the latter case, the aforedescribed monitoring device may be rather adapted for generating a signal in case of measuring that the value of the total resistance of the electric network falls below the predetermined threshold resistance value. Also, embodiments may detect both, overtemperature and undertemperature of one or more cells in the battery module; in the latter case, the monitoring device may be adapted for generating a signal in case of measuring that the value of the total resistance of the electric network exceeds over a predetermined first threshold resistance value or falls below a predetermined second threshold resistance value.

In one embodiment of the monitoring system according to the invention, each of the thermistors is a positive thermal coefficient (PTC) thermistor.

In one embodiment of the invention, the monitoring system further comprises at least one additional temperature sensor, wherein the monitoring device is adapted to use the signal of the at least one additional temperature sensor to determine the mean temperature of the battery module.

In one embodiment of the monitoring system according to the invention, the monitoring system is adapted to detect the resistance of at least one of the thermistors separately, wherein the monitoring device is adapted to use the resistance values of the separately detected thermistors to determine the mean temperature of the battery module.

In this context, the expression "detect[ing] the resistance of at least one of the thermistors separately" means that the resistance of the at least one of the thermistors (not including all of the thermistors) is detected independently from the resistance of the remaining thermistors or the total resistance of the network.

A further aspect of the invention is related to a battery module having a plurality of battery cells, the battery module comprising the monitoring system according to the invention.

In one embodiment of the invention, the monitoring device is integrated into a battery management unit (BMU) of the battery module.

Yet a further aspect of the invention is related to a battery pack comprising a plurality of battery modules according to the invention.

Still a further aspect of the invention is related to a vehicle comprising at least one battery module or at least one battery pack according to the invention.

Yet another aspect of the invention is related to a method for monitoring the temperature of the battery cells of a battery module, the method comprising the following steps:

a) detecting a mean temperature of the battery module;

b) determining a threshold resistance value in dependence of the detected mean temperature of the battery module;

c) measuring a total [electric] resistance of an electric network comprising a plurality of thermistors, wherein each of the thermistors is thermally connected to a battery cell;

d) generating a signal in case of detecting that the value of the total resistance of the electric network measured in step c) traverses the determined threshold resistance value;

wherein the detection of the mean temperature ($T_{amb}$) is performed independently from the measurement of the total resistance ($R_{tot}$) of the electric network.

Here, it is assumed that the battery module comprises a plurality of battery cells. The definitions of the expressions "plurality," "resistance," "value of the total resistance of the electric network," and "mean temperature" as given above in the context of the monitoring system according to the invention apply correspondingly in the context of the method according to the invention.

To briefly summarize the above, the method allows for a detection of temperature anomalies of cells in a battery module/pack using a network of temperature-sensitive resistors.

In one embodiment of the method according to the invention, steps a) to d) are permanently repeated when the battery module is to be monitored, e. g., when the battery module is in use. However, the battery module may also be monitored when it is in standby or not used.

In one embodiment of the method according to the invention, the electric network is a parallel connection of the thermistors or wherein the electric network is a series connection of the thermistors.

In one embodiment of the method according to the invention, each of the thermistors is a negative thermal coefficient (NTC) thermistor, and step d) comprises:

- generating a signal in case of detecting that the value of the total resistance of the electric network measured in step c) falls below the determined threshold resistance value.

In an alternative embodiment of the method according to the invention, each of the thermistors is a positive coefficient (PTC) thermistor, and step d) comprises:

- generating a signal in case of detecting that the value of the total resistance of the electric network measured in step c) exceeds over the determined threshold resistance value.

The system and the method according to the invention prove particularly suited for measuring an overtemperature of an individual battery cell; overtemperature of a large number of cells can be detected using dedicated temperature sensors strategically placed on a few points in the module/pack (which are typically installed in the battery anyhow for temperature monitoring).

When detecting overtemperature of a battery cell, several actions can be taken, depending on the detected temperature value of the overheated cell: the cooling power that is requested from the vehicle can be increased, the allowed power outtake from the battery can be limited, or, in the worst case, the operation of the battery pack can be shut down.

Further aspects of the present invention could be learned from the dependent claims or the following description.

## Brief Description of the Drawings

Features will become apparent to those of ordinary skill in the art by describing in detail exemplary embodiments with reference to the attached drawings in which:

Fig. 1    is a schematic drawing of a battery cell stack consisting of individual cells, where each cell is equipped with a temperature-dependent resistor, and wherein the resistors are electrically connected using a serial connection;

Fig. 2     illustrates schematically a parallel (a) and a serial (b) connection of the temperature-dependent resistors, a circuit for measuring the resistance being marked by "R";

Fig. 3     is a diagram illustrating the temperature-dependent resistance of an exemplary NTC resistor on a logarithmic scale for the ordinate (resistance) axis;

Fig. 4     is a diagram illustrating the total resistance of a parallel NTC network with 24 cells;

Fig. 5A    is a diagram illustrating the detection of a single battery cell with overtemperature in a parallel NTC network with 24 cells, wherein the absolute difference between the two total resistances is plotted in the diagram;

Fig. 5B    is a diagram illustrating the detection of a single battery cell with overtemperature in a parallel NTC network with 24 cells, wherein the relative difference between the two total resistances is plotted in the diagram;

Fig. 6A    is a diagram illustrating the detection of a single battery cell with overtemperature in a serial NTC network with 24 cells, wherein the absolute difference between the two total resistances is plotted in the diagram;

Fig. 6B    is a diagram illustrating the detection of a single battery cell with overtemperature in a serial NTC network with 24 cells, wherein the relative difference between the two total resistances is plotted in the diagram; and

Fig. 7     illustrates schematically the assembly of an embodiment of the monitoring system according to the invention.

## Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Features of the inventive concept and methods of accomplishing the same may be understood more readily by reference to the following detailed description of embodiments and the accompanying drawings. Hereinafter, example embodiments will be described in more detail with reference to the accompanying drawings. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described. In the drawings, the relative sizes of elements, layers, and regions may be exaggerated for clarity.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present invention.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value. Further, the use of "may" when describing embodiments of the present invention refers to "one or more embodiments of the present invention."

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

According to an embodiment of the invention, each cell inside a battery cell stack is equipped with a temperature-dependent resistor - for example, a positive thermal coefficient (PTC) thermistor or a negative thermal coefficient (NTC) thermistor - which is thermally coupled to the cell. In particular, the implementation of the new cell-connecting unit (CCU) flexprint stripe concept provides the opportunity to install a temperature-dependent resistor at every cell at very low cost (typical price point per NTC: 0.02 €; status per December 2019).

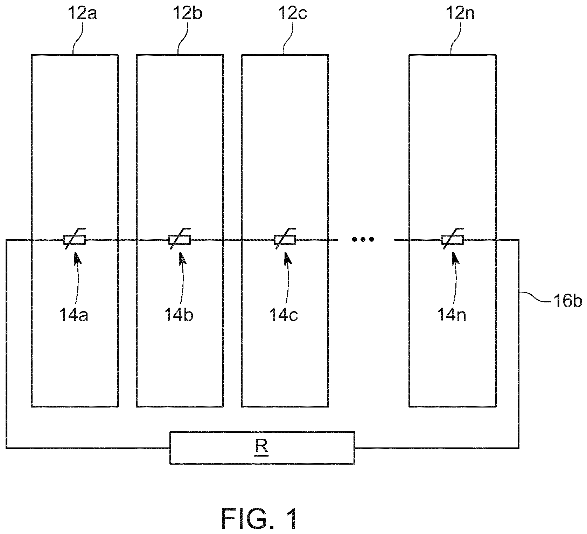

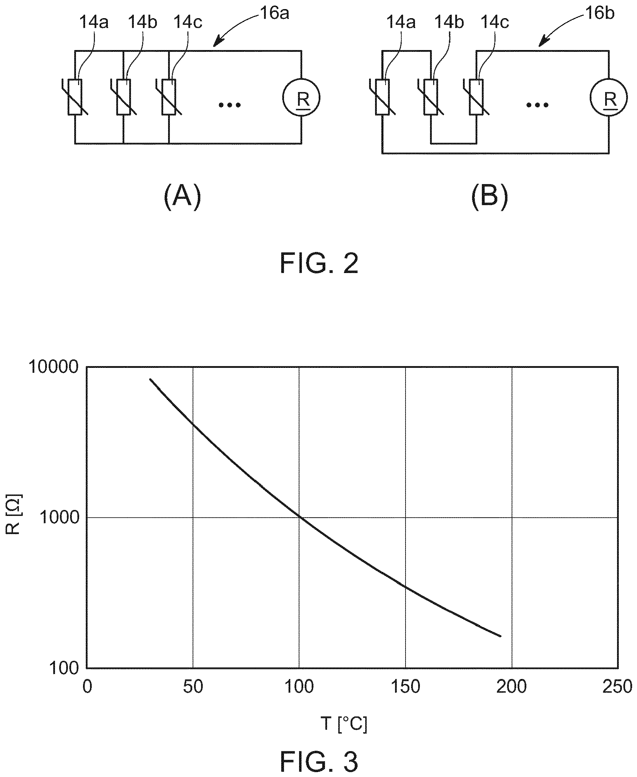

Figure 1 shows a schematic drawing of a battery cell stack consisting of individual cells 12a, 12b, 12c, ..., 12n, where each cell is equipped with a temperature-dependent resistor 14a, 14b, 14c, ..., 14n. The temperature-dependent resistors 14a, 14b, 14c, ..., 14n may each be an NTC or a PTC thermistor (see above). According to the figure, the temperature-dependent resistors 14a, 14b, 14c, ..., 14n are electrically connected by a serial connection 16b (see also Fig. 2B). The serial connection of the resistors 14a, 14b, 14c, ..., 14n forms an electric network of a plurality of temperature-dependent resistors. However, alternatively, a network may also be formed by a parallel connection of the temperature-dependent resistors 14a, 14b, 14c, ..., 14n (see Fig. 2A). The resistance of the total network of temperature-dependent resistors 14a, 14b, 14c, ..., 14n may be measured using standard techniques for resistance measurement, for example, by the application of a known or anyhow measured voltage and current measurement via a shunt or magnetic measurement. The measurement of the total network resistance is measured by a resistance measurement circuit R connected to the serial connection 16a of the resistors 14a, 14b, 14c, ..., 14n as indicated in the figure.

Although more complex connections (circuits) of temperature-dependent resistors may be employed for the invention, there are two main general ways of building up the circuit (network) of the resistors: serial and parallel connection. An electric network formed by a serial connection 16b of temperature-dependent resistors 14a, 14b, 14c, ... has been described above with reference to Fig. 1 and is, in a more schematic way and omitting the battery cells, also depicted in Fig. 2B. In contrast to Fig. 2B, an electric network formed by a parallel connection 16a of temperature-dependent resistors 14a, 14b, 14c, ... is schematically depicted in Fig. 2A. In either case, the network is connected with a resistance measurement circuit R as described above in the context of Fig. 1. Then, in both cases, it can be detected by monitoring the total (overall) resistance of the network, when (at least) one cell in the battery stack connected to the network starts heating up.

In principle, if three or more resistors are used, also combinations of parallel and serial connections may be used, in particular, if either each of the resistors is of the PTC-type or if each of the resistors is of the NTC-type. In the following, however, it will be focused on networks comprising pure parallel or pure serial connections of n temperature-dependent resistors 14a, 14b, 14c, ..., 14n, wherein $n \geq 2$ is a positive integer.

A typical temperature-dependent resistor has an exponential dependence on temperature. For instance, the resistance of an NTC resistor can be modeled using

$$R(T) = R_0 \exp\left( B \left( \frac{1}{T} - \frac{1}{T_0} \right) \right)$$

which is parametrized by the value of the resistance $R_0$ at a fixed temperature $T_0$ and the parameter $B$.

For an exemplary NTC resistor (the Murata NCP15XH103J03RC) and exemplary parameters $R_0$ = 10 kΩ at $T_0$ = 25°C and B = 3380 K, the temperature-dependence of the resistance is shown in the diagram of Figure 3, wherein the resistance of the NTC resistor is plotted over the temperature (note the logarithmic scale of the ordinate).

Due to the exponential dependence, a small change in temperature T leads to a large change in resistance R of the temperature-dependent resistor.

For measuring the temperature of each battery cell individually, the resistance of each of the temperature-dependent resistors applied to the cells may, of course, be measured separately. This can be used for temperature monitoring. However, state-of-the-art AFE chips do not have enough input channels to measure for each cell separately.

A more efficient way to detect temperature anomalies is to measure the total resistance $R_{tot}$ of a network of temperature-dependent resistors, where each of the resistors is applied to a different cell. One or several resistor networks may be implemented per module or per pack.

The mounting of the temperature-dependent resistor to the cell may be realized, e. g., by an integration inside the cell-connecting unit (CCU), which is a cheap option, if realized via FlexPrint.

General ways of building up the circuit of the resistors - e. g., serial and parallel connection - have already been described above.

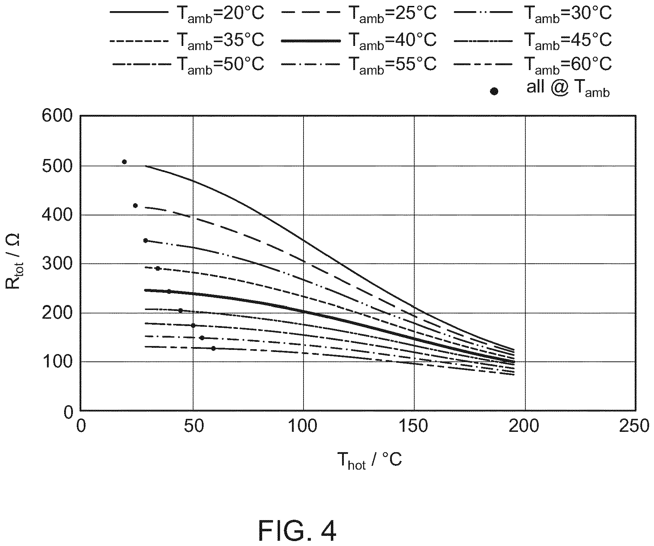

With the help of the diagrams shown in the following Figures 4, 5A, 5B, 6A and 6B, the calculation of the total resistance of exemplary networks of temperature-dependent resistors is illustrated, where one of the resistors is brought to an elevated temperature.

Figure 4 is a diagram showing the total resistance $R_{tot}$ of a parallel NTC network (using, as an example, the temperature characteristic of the Murata NCP15XH103J03RC as already shown in Fig. 3 for each of the NTC thermistors). The network comprises 24 NTC thermistors, each being thermally connected to a single battery cell of a battery module having 24 battery cells; in other words: each battery cell is equipped with one thermistor. It is assumed that 23 cells are at a (mean or ambient) temperature $T_{amb}$ but one single cell is at a temperature $T_{hot}$. The different curves shown are for different values of the ambient temperature $T_{amb}$ (see the legend); different values of the temperature $T_{hot}$ of the single cell are plotted along the abscissa. The resulting total resistance $R_{tot}$ is plotted along the ordinate. Data points, where the ambient temperature $T_{amb}$ equals the temperature $T_{hot}$ of the single cell (i. e., where $T_{amb} = T_{hot}$) - in other words: where all cells are at the same temperature -, are marked with dots.

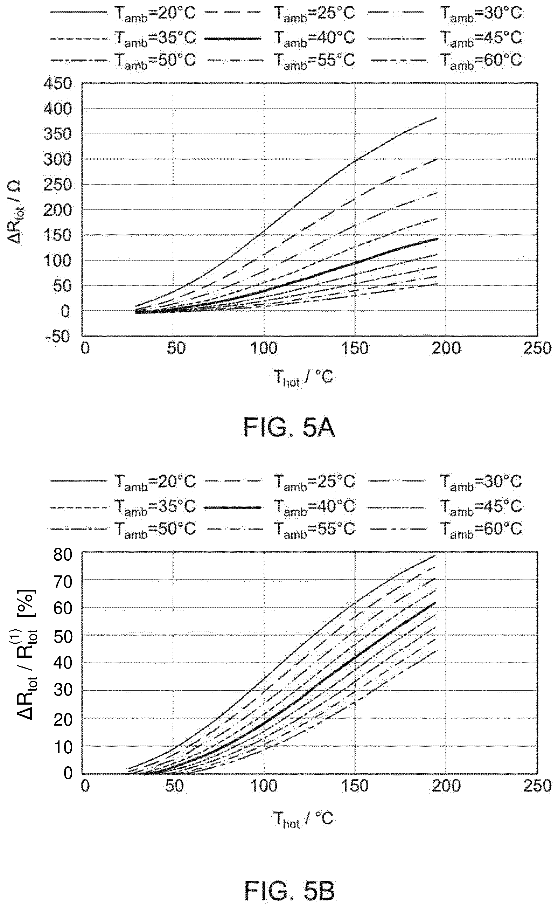

With the help of the diagram shown in Figure 5A, the detection of a single battery cell with overtemperature in a parallel NTC network is explained (again using, as an example, the temperature characteristic of the Murata NCP15XH103J03RC as shown in Fig. 3). The network comprises 24 NTC thermistors, each thermally connected to a battery cell of a battery module having 24 battery cells; in other words: each battery cell is equipped with one thermistor.

In a first calculation, a total resistance $R_{tot}^{(1)}$ is calculated with each cells being at the same temperature $T_{amb}$, and in a second calculation, a total resistance $R_{tot}^{(2)}$ is calculated with only 23 cells at the temperature $T_{amb}$ and only one cell at a temperature $T_{hot}$. Then, in the diagram of Fig. 5A, the absolute value of the difference between the two total resistances calculated in the first and the second calculation, $\Delta R_{tot} := R_{tot}^{(1)} - R_{tot}^{(2)}$ is plotted (in units of °C) over the temperature of the single cell at the temperature $T_{hot}$ (note that $R_{tot}^{(1)} > R_{tot}^{(2)}$ if $T_{hot} > T_{amb}$ and the plotted values are positive; see also the above remarks as to Fig. 3). The different curves shown are for different values of $T_{amb}$ (see the legend of the diagram); different values of $T_{hot}$ (in units of °C) are plotted along the abscissa.

The diagram shown in Figure 5B is based on the same calculations as explained above in the context of Fig. 5A, i. e., a first calculation yielding the total resistance $R_{tot}^{(1)}$ for each cells being at the same temperature $T_{amb}$ and a second calculation yielding the total resistance $R_{tot}^{(2)}$ for only 23 cells at the temperature $T_{amb}$ and one cell at a temperature $T_{hot}$, wherein a parallel NTC network is assumed (again using, as an example, the temperature characteristic of the Murata NCP15XH103J03RC as shown in Fig. 3). However, unlike to Fig. 5A showing the absolute value of the difference between the two total resistances calculated in the second and the first calculation, Fig. 5B shows the value of the difference between the total resistances calculated in the first and the second calculation relative to the total resistance without overtemperature; in other words: the values for $\Delta R_{tot} / R_{tot}^{(1)}$ with $\Delta R_{tot}(T_{hot}) := R_{tot}^{(1)} - R_{tot}^{(2)}$ are plotted in Fig. 5B over the temperature of the single cell at the temperature $T_{hot}$ (values shown in percent). The different curves shown are for different values of $T_{amb}$ (see the legend of the diagram); different values of $T_{hot}$ (in units of °C) are plotted along the abscissa.

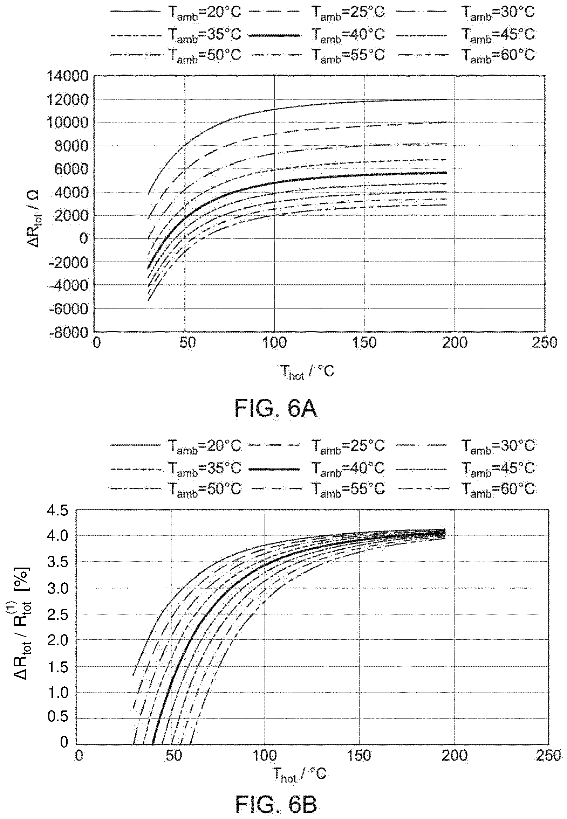

While Figs. 5A and 5B show the results for a network formed by a parallel circuit of NTC thermistors (see Fig. 2A), the following Figures 6A and 6B show the corresponding results for a network formed by a serial circuit of NTC thermistors (see Fig. 2B), wherein again, the temperature characteristic of the Murata NCP15XH103J03RC (as shown in Fig. 3) for each of the NTC thermistors is assumed.

With the help of the diagram of Figure 6A, the detection of a single cell with overtemperature in a serial NTC network is explained. Again, the network comprises 24 NTC thermistors, each thermally connected to a battery cell of a battery module having 24 battery cells; in other words: each battery cell is equipped with one thermistor. In a first calculation, a total resistance $R_{tot}^{(1)}$ is calculated with each cells being at the same temperature $T_{amb}$, and in a second calculation, a total resistance $R_{tot}^{(2)}$ is calculated with only 23 cells at the temperature $T_{amb}$ and only one cell at a temperature $T_{hot}$. Then, in the diagram of Fig. 6A, the absolute value of the difference between the two total resistances calculated in the first and the second calculation, $\Delta R_{tot} := R_{tot}^{(1)} - R_{tot}^{(2)}$ is plotted (in units of °C) over the temperature of the single cell at the temperature $T_{hot}$. The different curves shown are for different values of $T_{amb}$ (see the legend of the diagram); different values of $T_{hot}$ (in units of °C) are plotted along the abscissa.

Correspondingly, the diagram shown in Figure 6B is based on the same calculations as explained above in the context of Fig. 6A, i. e., a first calculation yielding the total resistance $R_{tot}^{(1)}$ for each cells being at the same temperature $T_{amb}$ and a second calculation yielding the total resistance $Rtot$ for only 23 cells at the temperature $T_{amb}$ and one cell at a temperature $T_{hot}$, wherein a serial NTC network is assumed. However, unlike to Fig. 6A showing the absolute value of the difference between the two total resistances calculated in the second and the first calculation, Fig. 6B shows the value of the difference between the total resistances calculated in the first and the second calculation relative to the total resistance without overtemperature; in other words: the values for $\Delta R_{tot}/R_{tot}^{(1)}$ with $\Delta R_{tot}(T_{hot}) := R_{tot}^{(1)} - R_{tot}^{(2)}$ are plotted in Fig. 6B over the temperature of the single cell at the temperature $T_{hot}$ (values shown in percent). The different curves shown are for different values of $T_{amb}$ (see the legend of the diagram); different values of $T_{hot}$ (in units of °C) are plotted along the abscissa. As can be taken from Figures 5A to 6B, there is a detectable difference between the case where all cells are at the same ambient temperature $T_{amb}$ and the case where one single cell has an overtemperature $T_{hot}$.

In a parallel network, the relative difference of the network's total resistance between the case where all cells are at the same temperature vs. the case where one cell has overtemperature is much more pronounced (see Fig. 5B). Therefore, a measurement of said relative difference is technically easier to implement in case of a parallel network than in case of a serial network. Embodiments of the invention based on a measurement of the relative difference of the total resistance of a parallel NTC thermistor network are therefore recommended. However, embodiments of the invention may also be based on a measurement of the relative difference of the total resistance of a serial NTC thermistor network (see Fig. 6B).

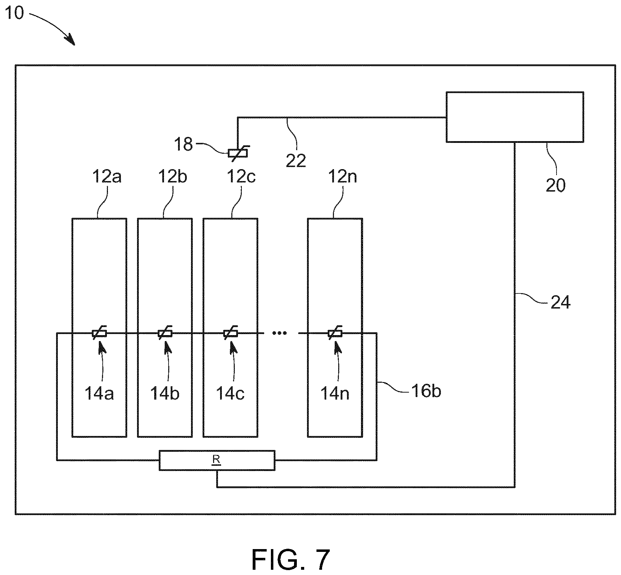

Finally, Figure 7 illustrates schematically a battery module 10 comprising the plurality of battery cells 12a, 12b, 12c, ..., 12n being thermally connected to a thermistor network comprising a serial connection of temperature-dependent resistors 14a, 14b, 14c, ..., 14n as described above in detail in the context of Fig. 1. The battery module 10 further comprises a battery management unit (BMU) and one additional temperature sensor 18. The BMU 20 acts as a monitoring device 20 and is connected to the resistance measurement circuit R via an (electric) connection 24 and to the additional temperature sensor 18 via an (electric) connection 22 to receive signals from the resistance measurement circuit R and from the additional temperature sensor 18, respectively, such that these signals can then be evaluated according to embodiments of the method of the invention. Alternatively, the resistance measurement circuit R may itself be integrated into the monitoring device 20 (i. e., in this example, into the BMU).

The additional temperature sensor 18 yields a signal to the monitoring device 20, the signal corresponding to a mean temperature within the battery module 10 that is assumed to correspond (or at least approximately correspond) to the ambient temperature $T_{amb}$ of the battery cells 12a, 12b, 12c, ..., 12n. The monitoring device 20 is adapted such that, when provided with the ambient temperature $T_{amb}$ of the battery cells as input, the monitoring device 20 is capable of calculating the overheating of a single cell. Under the assumption that only a single cell is affected by overheating and that all temperature-dependent resistors 14a, 14b, 14c, ..., 14n are NTC thermistors of the type as described in the context of Fig. 3, this can be done by a calculation as explained above in the context of Figs. 6A or 6B with the difference that now, the temperature $T_{hot}$ of the single overheated cell is evaluated (or estimated) in dependence of the ambient temperature $T_{amb}$ (i. e., the input yielded by the additional temperature sensor 18) and the measured difference of the network's (absolute or relative) total resistance calculated based on the signals generated and provided to the monitoring device 20 by the resistance measurement circuit R. In other words, the monitoring device 20 calculates the inverse functions of the functions shown in Figs. 6A or 6B, i. e., the monitoring device 20 calculates, for a given ambient temperature $T_{amb}$, the temperature $T_{hot}$ of an overheated battery cell (the abscissa in the diagrams of Figs. 6A and 6B) in dependence of the network's (absolute or relative) total resistance (the ordinate in the diagrams of Figs. 6A and 6B).

Then, the monitoring device 20 may compare the calculated temperature $T_{hot}$ of a (possibly) overheated battery cell with a threshold temperature $T_{thresh}$ in order to detect an overheating in one of the cells. The threshold value $T_{thresh}$ may depend on the ambient temperature $T_{amb}$.

Of course, due to the monotony of the functions (i. e., the curves plotted in Figs. 6A and 6B), it is easier to omit the step of explicitly calculating the temperature $T_{hot}$ of the single overheated cell. Instead, the measured total resistance of the network may directly be compared to a threshold value $R_{thresh}$ for the resistance that corresponds to the threshold temperature $T_{thresh}$ and is thus likewise dependent on $T_{amb}$.

It is clear that the above can be applied correspondingly to a network formed by a parallel connection of temperature-dependent resistors as depicted in Fig. 2A.

**Reference signs**

| | |
|---|---|
| 10 | battery module |
| 12a, 12b, 12c, 12n | battery cells |
| 14a, 14b, 14c, 14n | temperature-dependent resistors |
| 16a | parallel connection of temperature-dependent resistors |
| 16b | serial connection of temperature-dependent resistors |
| 18 | additional temperature sensor |
| 20 | battery management unit (BMU) |
| 22, 24 | electric connections |
| R | resistance measurement circuit R |
| $R_{tot}$ | total resistance of a network of temperature-dependent resistors |
| $T_{amb}$ | ambient / mean temperature within the battery module |
| $T_{hot}$ | temperature of an overheated battery cell |

**Claims**

1.    A monitoring system for monitoring the temperature of a battery module (10) having a plurality of battery cells (12a, 12b, 12c, 12n), the monitoring system comprising:

an electric network comprising a plurality of thermistors (14a, 14b, 14c, 14n), wherein each of the thermistors is thermally connected to a battery cell;
a monitoring device (20) being adapted for measuring a total resistance ($R_{tot}$) of the electric network comprising the plurality of thermistors (14a, 14b, 14c, 14n) and further being adapted for generating a signal in case of detecting that the value of the total resistance ($R_{tot}$) of the electric network traverses a predetermined threshold resistance value;
wherein the monitoring system is adapted to determine a mean temperature ($T_{amb}$) of the battery module independently from the measurement of the total resistance ($R_{tot}$) of the electric network; and
wherein the predetermined threshold resistance value is dependent on the mean temperature ($T_{amb}$) of the battery module (10).

2.    The monitoring system of claim 1, wherein the number of thermistors (14a, 14b, 14c, 14n) is smaller or equal to the number of battery cells (12a, 12b, 12c, 12n), and wherein each battery cell is connected to at most one thermistor and each thermistor is connected to one and only one battery cell.

3.    The monitoring system of claim 1 or 2, wherein the electric network is a parallel connection of the thermistors (14a, 14b, 14c, 14n) or wherein the electric network is a series connection of the thermistors (14a, 14b, 14c, 14n).

4. The monitoring system of any one of claims 1 to 3,

wherein the electric network is adapted such that the total resistance ($R_{tot}$) of the network decreases, as the temperature to which at least one of the thermistors is/are exposed increases, while the temperature to which the remaining thermistors are exposed remains constant; and
wherein the monitoring device is adapted for generating a signal in case of measuring that the value of the total resistance ($R_{tot}$) of the electric network falls below the predetermined threshold resistance value.

5. The monitoring system of claim 4, wherein each of the thermistors (14a, 14b, 14c, 14n) is an NTC thermistor.

6. The monitoring system of any one of claims 1 to 3,

wherein the electric network is adapted such that the total resistance ($R_{tot}$) of the network increases, as the temperature to which at least one of the thermistors is/are exposed increases, while the temperature to which the remaining thermistors are exposed remains constant; and
wherein the monitoring device is adapted for generating a signal in case of measuring that the value of the total resistance ($R_{tot}$) of the electric network exceeds over the predetermined threshold resistance value.

7. The monitoring system of claim 6, wherein each of the thermistors (14a, 14b, 14c, 14n) is a PTC thermistor.

8. The monitoring system of any one of claims 1 to 7, further comprising at least one additional temperature sensor (18), wherein the monitoring device (20) is adapted to use the signal of the at least one additional temperature sensor (18) to determine the mean temperature ($T_{amb}$) of the battery module (10).

9. The monitoring system of any one of claims 1 to 7, wherein the monitoring system is adapted to detect the resistance of at least one of the thermistors (14a, 14b, 14c, 14n) separately, wherein the monitoring device (20) is adapted to use the resistance values of the separately detected thermistors to determine the mean temperature ($T_{amb}$) of the battery module (10).

10. A battery module (10) having a plurality of battery cells (12a, 12b, 12c, 12n), the battery module comprising the monitoring system according to any one of claims 1 to 9.

11. A method for monitoring the temperature of the battery cells (12a, 12b, 12c, 12n) of a battery module (10), the method comprising the following steps:

a) detecting a mean temperature ($T_{amb}$) of the battery module (10);
b) determining a threshold resistance value in dependence of the detected mean temperature ($T_{amb}$) of the battery module (10);
c) measuring a total resistance ($R_{tot}$) of an electric network comprising a plurality of thermistors (14a, 14b, 14c, 14n), wherein each of the thermistors is thermally connected to a battery cell (12a, 12b, 12c, 12n);
d) generating a signal in case of detecting that the value of the total resistance ($R_{tot}$) of the electric network measured in step c) traverses the determined threshold resistance value;

wherein the detection of the mean temperature ($T_{amb}$) is performed independently from the measurement of the total resistance ($R_{tot}$) of the electric network.

12. The method according to claim 11, wherein steps a) to d) are permanently repeated during use of the battery module (10).

13. The method according to claim 11 or 12, wherein the electric network is a parallel connection (16a) of the thermistors (14a, 14b, 14c, 14n) or wherein the electric network is a series connection (16b) of the thermistors (14a, 14b, 14c, 14n).

14. The method according to claim 13, wherein each of the thermistors (14a, 14b, 14c, 14n) is an NTC thermistor, and wherein step d) comprises:

- generating a signal in case of detecting that the value of the total resistance ($R_{tot}$) of the electric network measured in step c) falls below the determined threshold resistance value.

**15.** The method according to claim 13, wherein each of the thermistors (14a, 14b, 14c, 14n) is a PTC thermistor, and wherein step d) comprises:

- generating a signal in case of detecting that the value of the total resistance ($R_{tot}$) of the electric network measured in step c) exceeds over the determined threshold resistance value.

**Patentansprüche**

**1.** Überwachungssystem zur Überwachung der Temperatur eines Batteriemoduls (10), das eine Vielzahl von Batteriezellen (12a, 12b, 12c, 12n) umfasst, wobei das Überwachungssystem umfasst:

ein elektrisches Netz, das eine Vielzahl von Thermistoren (14a, 14b, 14c, 14n) umfasst, wobei jeder der Thermistoren thermisch mit einer Batteriezelle verbunden ist;
eine Überwachungsvorrichtung (20), die angepasst ist, um einen Gesamtwiderstand ($R_{tot}$) des elektrischen Netzes zu messen, das die Vielzahl von Thermistoren (14a, 14b, 14c, 14n) umfasst, und die ferner angepasst ist, um ein Signal zu erzeugen, wenn erfasst wird, dass der Wert des Gesamtwiderstands ($R_{tot}$) des elektrischen Netzes einen vorgegebenen Widerstandsschwellenwert überschreitet;
wobei das Überwachungssystem angepasst ist, um eine mittlere Temperatur ($T_{amb}$) des Batteriemoduls unabhängig von der Messung des Gesamtwiderstands ($R_{tot}$) des elektrischen Netzes zu bestimmen; und
wobei der vorgegebene Widerstandsschwellenwert von der mittleren Temperatur ($T_{amb}$) des Batteriemoduls (10) abhängig ist.

**2.** Überwachungssystem nach Anspruch 1, wobei die Anzahl der Thermistoren (14a, 14b, 14c, 14n) kleiner oder gleich der Anzahl der Batteriezellen (12a, 12b, 12c, 12n) ist, und wobei jede Batteriezelle mit höchstens einem Thermistor verbunden ist und jeder Thermistor mit nur einer Batteriezelle verbunden ist.

**3.** Überwachungssystem nach Anspruch 1 oder 2, wobei das elektrische Netz eine Parallelschaltung der Thermistoren (14a, 14b, 14c, 14n) ist oder wobei das elektrische Netz eine Reihenschaltung der Thermistoren (14a, 14b, 14c, 14n) ist.

**4.** Überwachungssystem nach einem der Ansprüche 1 bis 3,

wobei das elektrische Netzwerk so angepasst ist, dass der Gesamtwiderstand ($R_{tot}$) des Netzes abnimmt, wenn die Temperatur, der mindestens einer der Thermistoren ausgesetzt ist/sind, zunimmt, während die Temperatur, der die übrigen Thermistoren ausgesetzt sind, konstant bleibt; und
wobei die Überwachungsvorrichtung zur Erzeugung eines Signals angepasst ist, wenn gemessen wird, dass der Wert des Gesamtwiderstands ($R_{tot}$) des elektrischen Netzes unter den vorbestimmten Widerstandsschwellenwert fällt.

**5.** Überwachungssystem nach Anspruch 4, wobei jeder der Thermistoren (14a, 14b, 14c, 14n) ein NTC-Thermistor ist.

**6.** Überwachungssystem nach einem der Ansprüche 1 bis 3,

wobei das elektrische Netz so angepasst ist, dass der Gesamtwiderstand ($R_{tot}$) des Netzes zunimmt, wenn die Temperatur, der mindestens einer der Thermistoren ausgesetzt ist/sind, zunimmt, während die Temperatur, der die übrigen Thermistoren ausgesetzt sind, konstant bleibt; und
wobei die Überwachungsvorrichtung zur Erzeugung eines Signals angepasst ist, wenn gemessen wird, dass der Wert des Gesamtwiderstands ($R_{tot}$) des elektrischen Netzes den vorgegebenen Widerstandsschwellenwert überschreitet.

**7.** Überwachungssystem nach Anspruch 6, wobei jeder der Thermistoren (14a, 14b, 14c, 14n) ein PTC-Thermistor ist.

**8.** Überwachungssystem nach einem der Ansprüche 1 bis 7, das ferner mindestens einen zusätzlichen Temperatursensor (18) umfasst, wobei die Überwachungsvorrichtung (20) angepasst ist, um das Signal des mindestens einen zusätzlichen Temperatursensors (18) zu verwenden, um die mittlere Temperatur ($T_{amb}$) des Batteriemoduls (10) zu bestimmen.

**9.** Überwachungssystem nach einem der Ansprüche 1 bis 7, wobei das Überwachungssystem angepasst ist, um den Widerstand von mindestens einem der Thermistoren (14a, 14b, 14c, 14n) separat zu erfassen, wobei die Überwachungsvorrichtung (20) angepasst ist, um die Widerstandswerte der separat erfassten Thermistoren zu verwenden, um die mittlere Temperatur ($T_{amb}$) des Batteriemoduls (10) zu bestimmen.

**10.** Batteriemodul (10), umfassend eine Vielzahl von Batteriezellen (12a, 12b, 12c, 12n), wobei das Batteriemodul das Überwachungssystem nach einem der Ansprüche 1 bis 9 umfasst.

**11.** Verfahren zur Überwachung der Temperatur der Batteriezellen (12a, 12b, 12c, 12n) eines Batteriemoduls (10), wobei das Verfahren die folgenden Schritte umfasst:

a) Erfassen einer mittleren Temperatur ($T_{amb}$) des Batteriemoduls (10);
b) Bestimmen eines Widerstandsschwellenwerts in Abhängigkeit von der erfassten mittleren Temperatur ($T_{amb}$) des Batteriemoduls (10);
c) Messen eines Gesamtwiderstands ($R_{tot}$) eines elektrischen Netzes, das eine Vielzahl von Thermistoren (14a, 14b, 14c, 14n) umfasst, wobei jeder der Thermistoren thermisch mit einer Batteriezelle (12a, 12b, 12c, 12n) verbunden ist;
d) Erzeugen eines Signals, wenn erfasst wird, dass der in Schritt c) gemessene Wert des Gesamtwiderstands ($R_{tot}$) des elektrischen Netzes den vorgegebenen Widerstandsschwellenwert überschreitet.

**12.** Verfahren nach Anspruch 11, wobei die Schritte a) bis d) während der Nutzung des Batteriemoduls (10) permanent wiederholt werden.

**13.** Verfahren nach Anspruch 11 oder 12, wobei das elektrische Netz eine Parallelschaltung (16a) der Thermistoren (14a, 14b, 14c, 14n) ist oder wobei das elektrische Netz eine Reihenschaltung (16b) der Thermistoren (14a, 14b, 14c, 14n) ist.

**14.** Verfahren nach Anspruch 13, wobei jeder der Thermistoren (14a, 14b, 14c, 14n) ein NTC-Thermistor ist, und wobei Schritt d) umfasst:

- Erzeugen eines Signals, wenn erfasst wird, dass der in Schritt c) gemessene Wert des Gesamtwiderstands ($R_{tot}$) des elektrischen Netzes unter den vorgegebenen Widerstandsschwellenwert fällt.

**15.** Verfahren nach Anspruch 13, wobei jeder der Thermistoren (14a, 14b, 14c, 14n) ein PTC-Thermistor ist, und wobei Schritt d) umfasst:

- Erzeugen eines Signals, wenn erfasst wird, dass der in Schritt c) gemessene Wert des Gesamtwiderstands ($R_{tot}$) des elektrischen Netzes den vorgegebenen Widerstandsschwellenwert überschreitet.

**Revendications**

**1.** Système de surveillance permettant de surveiller la température d'un module de batterie (10) ayant une pluralité de cellules de batterie (12a, 12b, 12c, 12n), le système de surveillance comprenant :

un réseau électrique comprenant une pluralité de thermistances (14a, 14b, 14c, 14n), dans lequel chacune des thermistances est connectée thermiquement à une cellule de batterie ;
un dispositif de surveillance (20) étant adapté pour mesurer une résistance totale ($R_{tot}$) du réseau électrique comprenant la pluralité de thermistances (14a, 14b, 14c, 14n) et étant en outre adapté pour générer un signal en cas de détection que la valeur de la résistance totale ($R_{tot}$) du réseau électrique dépasse une valeur seuil de résistance prédéterminée ;
dans lequel le système de surveillance est adapté pour déterminer une température moyenne ($T_{amb}$) du module de batterie indépendamment de la mesure de la résistance totale ($R_{tot}$) du réseau électrique ; et
dans lequel la valeur seuil de résistance prédéterminée dépend de la température moyenne ($T_{amb}$) du module de batterie (10).

**2.** Système de surveillance selon la revendication 1, dans lequel le nombre de thermistances (14a, 14b, 14c, 14n) est inférieur ou égal au nombre de cellules de batterie (12a, 12b, 12c, 12n), et dans lequel chaque cellule de batterie est connectée à au plus une thermistance et chaque thermistance est connectée à une seule et unique cellule de batterie.

3. Système de surveillance selon la revendication 1 ou 2, dans lequel le réseau électrique est une connexion en parallèle des thermistances (14a, 14b, 14c, 14n) ou dans lequel le réseau électrique est une connexion en série des thermistances (14a, 14b, 14c, 14n).

4. Système de surveillance selon l'une quelconque des revendications 1 à 3,

dans lequel le réseau électrique est adapté de sorte que la résistante totale ($R_{tot}$) du réseau diminue, lorsque la température à laquelle au moins l'une des thermistances est/sont exposée(s) augmente, tandis que la température à laquelle les thermistances restantes sont exposées reste constante ; et
dans lequel le dispositif de surveillance est adapté pour générer un signal en cas de mesure selon laquelle la valeur de la résistante totale ($R_{tot}$) du réseau électrique tombe au-dessous de la valeur seuil de résistance prédéterminée.

5. Système de surveillance selon la revendication 4, dans lequel chacune des thermistances (14a, 14b, 14c, 14n) est une thermistance CTN.

6. Système de surveillance selon l'une quelconque des revendications 1 à 3,

dans lequel le réseau électrique est adapté de sorte que la résistance totale ($R_{tot}$) du réseau augmente, lorsque la température à laquelle au moins l'une des thermistances est/sont exposée(s) augmente, tandis que la température à laquelle les thermistances restantes sont exposées reste constante ; et
dans lequel le dispositif de surveillance est adapté pour générer un signal en cas de mesure selon laquelle la valeur de la résistante totale ($R_{tot}$) du réseau électrique dépasse la valeur seuil de résistance prédéterminée.

7. Système de surveillance selon la revendication 6, dans lequel chacune des thermistances (14a, 14b, 14c, 14n) est une thermistance CTP.

8. Système de surveillance selon l'une quelconque des revendications 1 à 7, comprenant en outre au moins un capteur de température supplémentaire (18), dans lequel le dispositif de surveillance (20) est adapté pour utiliser le signal de l'au moins un capteur de température supplémentaire (18) pour déterminer la température moyenne ($T_{amb}$) du module de batterie (10).

9. Système de surveillance selon l'une quelconque des revendications 1 à 7, dans lequel le système de surveillance est adapté pour détecter la résistance d'au moins l'une des thermistances (14a, 14b, 14c, 14n) séparément, dans lequel le dispositif de surveillance (20) est adapté pour utiliser les valeurs de résistance des thermistances détectées séparément pour déterminer la température moyenne ($T_{amb}$) du module de batterie (10).

10. Module de batterie (10) ayant une pluralité de cellules de batterie (12a, 12b, 12c, 12n), le module de batterie comprenant le système de surveillance selon l'une quelconque des revendications 1 à 9.

11. Procédé de surveillance de la température des cellules de batterie (12a, 12b, 12c, 12n) d'un module de batterie (10), le procédé comprenant les étapes suivantes :

a) la détection d'une température moyenne ($T_{amb}$) du module de batterie (10) ;
b) la détermination d'une valeur seuil de résistance en fonction de la température moyenne ($T_{amb}$) détectée du module de batterie (10) ;
c) la mesure d'une résistance totale ($R_{tot}$) d'un réseau électrique comprenant une pluralité de thermistances (14a, 14b, 14c, 14n), dans lequel chacune des thermistances est connectée thermiquement à une cellule de batterie (12a, 12b, 12c, 12n) ;
d) la génération d'un signal en cas de détection que la valeur de la résistance totale ($R_{tot}$) du réseau électrique mesurée à l'étape c) dépasse la valeur seuil de résistance déterminée ;

dans lequel la détection de la température moyenne ($T_{amb}$) est réalisée indépendamment de la mesure de la résistance totale ($R_{tot}$) du réseau électrique.

**12.** Procédé selon la revendication 11, dans lequel les étapes a) à d) sont répétées de façon permanente pendant l'utilisation du module de batterie (10).

**13.** Procédé selon la revendication 11 ou 12, dans lequel le réseau électrique est une connexion parallèle (16a) des thermistances (14a, 14b, 14c, 14n) ou dans lequel le réseau électrique est une connexion en série (16b) des thermistances (14a, 14b, 14c, 14n).

**14.** Procédé selon la revendication 13, dans lequel chacune des thermistances (14a, 14b, 14c, 14n) est une thermistance CTN, et dans lequel l'étape d) comprend :

- la génération d'un signal en cas de détection que la valeur de la résistance totale ($R_{tot}$) du réseau électrique mesurée à l'étape c) tombe au-dessous de la valeur seuil de résistance déterminée.

**15.** Procédé selon la revendication 13, dans lequel chacune des thermistances (14a, 14b, 14c, 14n) est une thermistance CTP, et dans lequel l'étape d) comprend :

- la génération d'un signal en cas de détection que la valeur de la résistance totale ($R_{tot}$) du réseau électrique mesurée à l'étape c) dépasse la valeur seuil de résistance déterminée.

FIG. 1

FIG. 2

FIG. 3

FIG. 4

FIG. 5A

FIG. 5B

FIG. 6A

FIG. 6B

FIG. 7

**EP 3 916 880 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011210703 A
- JP 2007123287 B
- US 2009317699 A